# EUROPEAN PATENT APPLICATION

(11) **EP 4 467 236 A1**
(43) Date of publication of application: **27.11.2024**
(21) Application number: 24158273.3
(22) Date of filing: 19.02.2024
(51) Int. Cl.: B01J 19/12, C02F 1/02, C02F 1/20, C02F 1/32, C02F 1/72

(54) **REACTION GENERATION APPARATUS AND METHOD**

(30) Priority: 22.05.2023 JP 2023084048
(71) Applicant: Hitachi, Ltd., Tokyo 100-8280 (JP)
(72) Inventor: NAKAMURA, Keigo, Tokyo, 100-8280 (JP); OKAMOTO, Masakuni, Tokyo, 100-8280 (JP); YABUUCHI, Shin, Tokyo, 100-8280 (JP); TAKAHASHI, Hiromasa, Tokyo, 100-8280 (JP)
(74) Representative: Strehl Schübel-Hopf & Partner

(57) **Abstract**

A production apparatus (100) includes: a bubble generation apparatus (1) to generate, in water, fine bubbles of a raw material gas which contains bubbles of at least one of micro-bubbles or ultrafine-bubbles; a catalyst (2) configured to promote generation reaction from the raw material gas to a target component in the water; a grasping mechanism (6) configured to grasp a state of the fine bubbles (9) in the water; and a control device (7) configured to control the bubble generation apparatus (1) based on a result of grasping by the grasping mechanism (6). The catalyst (2) contains a photocatalyst configured to promote the generation reaction when irradiated with light.

## Description

### TECHNICAL FIELD

The present disclosure relates to a production apparatus and a production method.

### BACKGROUND ART

There has been concern about a loss of biodiversity in the future because of global warming and environmental pollution which have been caused by chemical substances flowing out into the natural world in recent years. Among chemical substances which are released into the natural world in social activities, reactive nitrogen is emitted in a large amount, and nitrous oxide is a greenhouse gas which exhibits effect of about 300 times that of carbon dioxide and is also a gas which destroys the ozone layer. In order to recover the ecological system and achieve sustainable social activities, it is desirable to reduce reactive nitrogen from the environment. To that end, by recovering reactive nitrogen and converting reactive nitrogen to, for example, ammonia, a nitrogen-circulating society in which reactive nitrogen can be reused as, for example, power generation fuels, and fertilizers and feeds of animals and plants can be achieved.

To achieve a nitrogen-circulating society, one of challenges is to efficiently convert reactive nitrogen to ammonia. Since the current conversion technology of nitrogen to ammonia uses large energy, a green ammonia conversion technology utilizing natural energy which can be produced with low energy has been attracting attention. The green ammonia conversion technology is a method for converting nitrogen to ammonia by utilizing sunlight and photocatalysts and is one of the leading candidates.

Claim 1 of the following Patent Document 1 (JP2011-104515A) describes that "A photocatalytic reaction apparatus which conducts photocatalytic reaction by irradiating a liquid raw material and a gas raw material with light under the presence of a photocatalyst, the photocatalytic reaction apparatus comprising: irradiation means for emitting the light; a reaction container which is transparent to the light and which stores therein the photocatalyst and the liquid raw material in a pressurized state; and a bubbling apparatus which supplies the gas raw material into the liquid raw material in a bubbling state."

In the apparatus described in the patent document 1, bubbles of the raw material gas are supplied into the reaction container which stores the liquid raw material in a pressurized state (paragraph 0043). However, among gases, there are gases having low solubility into water, and the disposition of the raw material gas into water is insufficient with pressurization of the liquid raw material.

### TECHNICAL PROBLEM TO BE SOLVED

An object of the present disclosure is to provide a production apparatus and a production method which are capable of disposing a sufficient amount of a raw material gas in water.

### DISCLOSURE OF INVENTION

A production apparatus of the present disclosure includes: a bubble generation apparatus configured to generate, in water, fine bubbles of a raw material gas which contains bubbles of at least one of micro-bubbles or ultrafine-bubbles; and a catalyst configured to promote generation reaction from the raw material gas to a target component in the water.

According to the present disclosure, a production apparatus and a production method which are capable of disposing a sufficient amount of a raw material gas in water can be provided.

### BRIEF DESCRIPTION OF THE DRAWINGS

FIG. 1 is a schematic diagram showing a production apparatus of the present disclosure.
FIG. 2 is a graph showing a solubility of ammonia in water.
FIG. 3 is a graph showing a solubility of nitrogen in water.
FIG. 4 is a flowchart showing a production method of the present disclosure.
FIG. 5 is a schematic diagram showing a production apparatus according to another embodiment.
FIG. 6 is a schematic diagram showing a production apparatus according to another embodiment.
FIG. 7 is a schematic diagram showing a production apparatus according to another embodiment.

### DESCRIPTION OF THE EMBODIMENTS

Hereinafter, modes for carrying out the present disclosure (referred to as embodiments) will be described with reference to the drawings. In the following description of one embodiment, other embodiments that can be applied to the one embodiment will be also described as appropriate. The present disclosure is not limited to the following one embodiment, and different embodiments can be combined or embodiments can be modified as desired unless the effects of the present disclosure are significantly impaired. In addition, the same members are denoted by the same reference signs, and repetitive description is omitted. Moreover, members having the same function are denoted by the same name. The contents of the drawings are only schematic, and there are cases where the configurations are changed from the actual ones, or illustrations of some members are omitted or modified among the drawings, unless the effects of the present disclosure are significantly impaired, for the sake of illustration. In addition, all the configurations do not necessarily have to be included in the same embodiment.

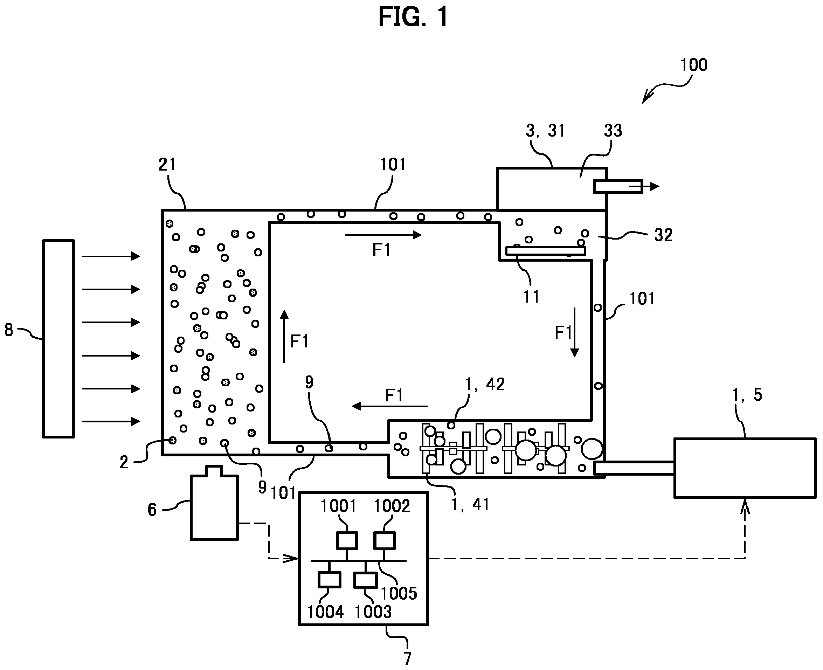

FIG. 1 is a schematic diagram showing a production apparatus 100 of the present disclosure. The production apparatus 100 is an apparatus that produces a target component, for example, ammonia, from a raw material gas, for example, nitrogen. Note that the raw material gas and the target component are not limited to these, and the production apparatus 100 may be configured to produce an alcohol such as methanol from for example, carbon dioxide or the like. The production is executed by chemical reaction that generates the target component from the raw material gas (that is, generation reaction). The generation reaction proceeds in water. In the present disclosure, "water" may be general water (for example, tap water, industrial water, or the like) or may be pure water (H₂O). In addition, the water used in the production apparatus 100 may be only water (a solvent) containing no solute or may be an aqueous solution containing a solute. The water temperature is not particularly limited but may be, for example, 15°C or more and 30°C or less unless otherwise noted.

The production apparatus 100 includes a bubble generation apparatus 1, a reaction tank 21, a separation apparatus 3, a light source 8, a grasping mechanism 6, and a control device 7. Among these, the bubble generation apparatus 1, the separation apparatus 3, and the reaction tank 21 are connected by pipes 101, and water and fine bubbles 9 circulated as indicated by a solid arrow F1 in FIG. 1 (that is, flow in one direction).

The bubble generation apparatus 1 generates the fine bubbles 9 of the raw material gas in the water. The fine bubbles 9 are configured to contain bubbles of at least one of micro-bubbles (hereinafter referred to as "MB" as appropriate) or ultrafine-bubbles (hereinafter referred to as "UFB" as appropriate). Physical properties of MB are defined in, for example, ISO 20480-1:2017, and MB is bubbles having a bubble size of, for example, 1 µm or more and less than 100 µm. Physical properties of UFB are defined in the same ISO. UFB is bubbles having a bubble size of, for example, less than 1 µm, and is bubbles conventionally called "nano-bubbles".

MB and UFB have properties of not rising-up in water but remaining in water. In addition, MB and UFB also have properties of having an increasing gas-liquid interface. Moreover, MB and UFB also have properties of having high pressure inside the bubbles. Then, MB and UFB have properties that the bubbles are negatively charged. Hence, when the fine bubbles 9 are not only fine (for example, less than 100 µm) but also contain bubbles of at least one of MB or UFB defined in the above ISO, it is possible to dispose a sufficient amount of the raw material gas in the water (cause a sufficient amount of the raw material gas to be present in the water as bubbles) by utilizing these characteristic properties.

The fine bubbles 9 may contain bubbles other than bubbles of at least one of MB or UFB. However, when the fine bubbles 9 contain bubbles other than bubbles of at least one of MB or UFB, it is preferable that such bubbles be not caused to be contained positively but be bubbles caused to be contained inevitably at the time of production of at least one of MB or UFB.

The raw material gas is a gas used as a raw material for the target component, and normally has properties of being poorly soluble in water. In the present disclosure, a poorly-soluble raw material gas means a gas having a solubility of 0.1 mol or less per 1 L of water at the temperature of the water (for example, 20°C) and the pressure of the gas (for example, 1013 hPa) which are used in the production apparatus 100. Such a gas is, for example, a nitrogen oxide (at least one of nitrogen monoxide or nitrogen dioxide), a carbon oxide (at least one of carbon monoxide or carbon dioxide), or the like besides the above-described nitrogen, but is not limited to these. The raw material gas is normally determined depending on the type of the target component.

In an example of the present disclosure, the raw material gas contains at least one of nitrogen or a nitrogen oxide, and the target component contains ammonia. Ammonia can be generated by using at least one of nitrogen or a nitrogen oxide. Nitrogen can be obtained, for example, by detoxifying reactive nitrogen.

In another embodiment, the raw material gas contains a carbon oxide, and the target component contains an alcohol. The alcohol includes, for example, alcohols having 1 or more and 3 or less carbon atoms. An alcohol having, for example, 1 or more and 3 or less carbon atoms such as for example, methanol, ethanol, or propanol is generated by using a carbon oxide.

The bubble generation apparatus 1 includes: a refinement tank 42 that houses a refinement mechanism 41; and an introduction apparatus 5. The raw material gas is introduced into the water in the refinement tank 42 by the introduction apparatus 5. The introduction apparatus 5 is, for example, a gas supply pump. The introduction apparatus 5 is connected to the control device 7 via an electrical signal line indicated by a dashed line in FIG. 1. The control device 7 will be described later. In the refinement tank 42, the refinement mechanism 41 refines the raw material gas to generate the fine bubbles 9. The refinement mechanism 41 is, for example, stirring blades. The fine bubbles 9 generated in the bubble generation apparatus 1 flow into the reaction tank 21 on the downstream side in a water flow direction indicated by a solid arrow F1 in FIG. 1.

The reaction tank 21 houses a catalyst 2. The catalyst 2 is included in the production apparatus 100 and promotes generation reaction from the raw material gas to the target component in water. Hereinafter, when the "generation reaction" is simply stated, this means the "generation reaction" mentioned here. Conditions such as components, structure, physical properties of the catalyst 2 may be determined as appropriate depending on the type of the target component, conditions of the generation reaction (water temperature, water pressure, and the like), and the like.

The catalyst 2 contains a photocatalyst which promotes the generation reaction when irradiated with light. By using such a catalyst, the speed of the generation reaction can be controlled by controlling the amount of light to be delivered to the catalyst 2 (light amount control). Hence, the progress of the generation reaction can be easily controlled. However, the catalyst 2 may contain a catalyst other than a photocatalyst, or may be a catalyst other than a photocatalyst. In the example of the present disclosure, the catalyst 2 has a particle shape having an average particle size of, for example, 1 µm or more and 1 mm or less based on, for example, a laser diffraction method. Hence, the catalyst 2 is normally suspended in water. Forming the catalyst 2 into a particle shape increases the specific surface area of the catalyst 2, thus improving the catalytic performance.

In the production apparatus 100, water flow is generated in the direction of the solid arrow F1 by a liquid supply pump which is not shown. In view of this, to retain the catalyst 2 in the reaction tank 21 irrespective of the water flow, a filter (not shown) may be placed in at least the pipe 101 on the downstream side among the two pipes 101 connected to the reaction tank 21. In the example of the present disclosure, no filter is placed for simplifying the installation, and the catalyst 2 having, for example, a particle shape circulates together with the water in the pipes 101 of the production apparatus 100.

The reaction tank 21 is configured by being partitioned by walls made of, for example, a light transmissive material (resin, glass, or the like). The inside of the reaction tank 21 is irradiated with light from the light source 8 placed outside the reaction tank 21. In this way, the catalyst 2 receives light, allowing the catalyst 2 to exert the catalytic function. The wavelength of light for irradiation is not particularly limited, and may be set to a wavelength used for the catalyst 2 to exert the catalytic function.

The production apparatus 100 includes the grasping mechanism 6. The grasping mechanism 6 grasps the state of the fine bubbles 9 in the water in, for example, the reaction tank 21. "State" mentioned here includes, for example, the size (diameter) of the fine bubbles 9, the concentration thereof in the water, and the like. The grasping mechanism 6 is, for example, a camera placed outside the reaction tank 21. The image of the fine bubbles 9 can be captured by the camera capturing the inside of the reaction tank 21 through the wall made of a light transmissive material. Then, by checking the state of the fine bubbles 9 in the image thus captured, it is possible to grasp the state of the fine bubbles 9. Particularly, the size of the fine bubbles 9, the number (that is, concentration) of the fine bubbles can be grasped (determined) based on differences in color on the image, for example. The grasping mechanism 6 is connected to the control device 7 through the electrical signal line indicated by the dashed line in FIG. 1. The control device 7 will be described later.

The target component (not shown) generated in the reaction tank 21 flows into the separation apparatus 3 on the downstream side in the water flow direction indicated by the solid arrow F1 in FIG. 1. The target component may be poorly soluble, or may be a component which is easily dissolved in the water. In the example of the present disclosure, the target component contains ammonia, and ammonia is easily dissolved in the water. Hence, ammonia, which is the target component, is dissolved in the water, and ammonia flows together with the water to the separation apparatus 3 in a form that cannot be visually recognized from the outside.

The separation apparatus 3 separates the target component generated in the water from the water. The separation apparatus 3 contains a water phase 32 and a gas phase 33 inside a housing 31. The water phase 32 is a phase which is water containing the target component and is composed of water having flowed therein from the reaction tank 21. The gas phase 33 is a phase which is formed over the water phase 32 and is adjacent to the water phase 32.

The separation apparatus 3 includes a heating mechanism 11 which heats at least part of the water containing the target component. In the example of the present disclosure, the heating mechanism 11 heats all the water containing the target component which has flowed into the reaction tank 21 from the separation apparatus 3. Heating increases the water temperature, and lowers the solubility of the target component. This allows the target component present in the water phase 32 to be moved to the gas phase 33, so that the target component is separated from the water. In addition, this can simplify the tank configuration of the separation apparatus 3 as compared with pressure reduction, thus facilitating the separation. Note that in the separation apparatus 3, MB or UFB (or both of these) is caused to remain in the water also by heating the water by means of the heating mechanism 11 due to the properties of MB and UFB. Hence, part of the fine bubbles 9 is returned to the bubble generation apparatus 1, which is disposed downstream of the separation apparatus 3.

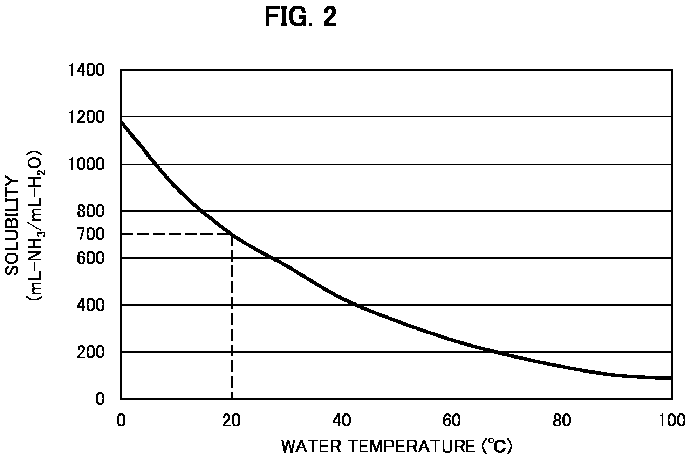

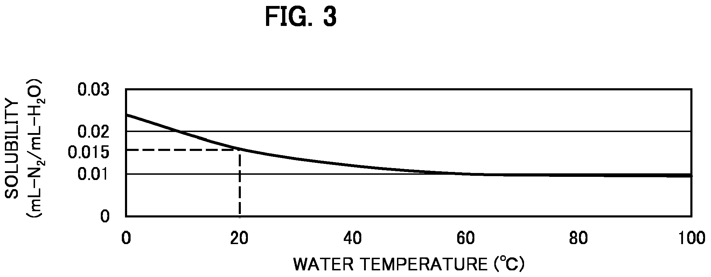

FIG. 2 is a graph showing a solubility of ammonia in water. FIG. 3 is a graph showing a solubility of nitrogen in water. In FIG. 2 and FIG. 3, the horizontal axis indicates a water temperature, and the vertical axis indicates an amount of ammonia or nitrogen dissolved (unit is mL) per 1 mL of water. In FIG. 2, the scale of the vertical axis is from 0 mL to 1400 mL. In FIG. 3, the scale of the vertical axis is from 0 mL to 0.03 mL.

As shown in FIG. 2, about 700 mL of ammonia is dissolved in 1 mL of water at 20°C. Hence, ammonia exhibits a very high solubility and is dissolved in water immediately after being generated in water. On the other hand, as shown in FIG. 3, about 0.015 mL of nitrogen is dissolved in 1 mL of water at 20°C. Hence, nitrogen exhibits a very low solubility and is present as bubbles in water.

When a saturated aqueous solution of ammonia is heated from 20°C to 100°C, an amount of ammonia in the water to be released to the gas phase is about 600 mL. On the other hand, when a saturated aqueous solution of nitrogen is heated from 20°C to 100°C, an amount of nitrogen in the water to be released to the gas phase is about 0.006 mL. Hence, there is a difference in released amount of about 100000 times. Hence, when the heating mechanism 11 (FIG. 1) heats the water, most of gas generated from the water in the separation apparatus 3 are ammonia. Thus, ammonia can be obtained in a high concentration. Particularly, as described above, MB and UFB do not disappear even upon heating of the water. Hence, even when the fine bubbles 9 are present in the water, it is difficult for the raw material gas in the fine bubbles 9 to move to the gas phase, and ammonia can be obtained in a high concentration.

As described above, the heating mechanism 11 is preferably included in the case where a value of S2/S1 (a value obtained by dividing S2 by S1) is 100 or more, preferably 1000 or more, and more preferably 10000 or more, where S1 represents a solubility of the raw material gas in water, and S2 represents a solubility of the target component in water, at a heating temperature by the heating mechanism 11 (a water temperature at the time of heating, which is for example 100°C). That is, the larger the difference in solubility between a raw material gas and a target component is, the more preferable it is to include the heating mechanism 11. This makes it possible to preferentially collect a target component by heating from among a raw material gas and the target component dissolved in water.

A target component that satisfies such a relation may be, for example, hydrogen chloride or the like besides the above-described ammonia, alcohols (methanol, ethanol, and the like).

Referring back to FIG. 1, the water from which the target component has been separated in the separation apparatus 3 flows together with the remaining fine bubbles 9 into the reaction tank 21 on the downstream side in the water flow direction indicated by the solid arrow F1.

The bubble generation apparatus 1 and the grasping mechanism 6 are connected to the control device 7 as described above. The control device 7 controls the bubble generation apparatus 1 based on the result of grasping by the grasping mechanism 6. This makes it possible to control the generation of the fine bubbles 9 by the bubble generation apparatus 1 based on the state of the fine bubbles 9 in the reaction tank 21.

The control device 7 controls the bubble generation apparatus 1 such that the amount of the fine bubbles 9 present in the water, which has been grasped by the grasping mechanism 6, becomes within a predetermined range. This makes it possible to introduce a proper amount of the raw material gas, and to thus improve reaction efficiency in the reaction tank 21. For example, if the amount of the raw material gas supplied is excessive, light from the light source 8 is interrupted, and this makes it difficult for the light to reach the catalyst 2. As a result, the efficiency of producing the target component using the catalyst 2 decreases. On the other hand, if the amount of the raw material gas supplied is insufficient as well, the efficiency of producing the target component decreases. In view of this, the grasping mechanism 6 measures, for example, the amount, concentration, size, and the like of the fine bubbles 9 to determine the amount of the fine bubbles 9 present in the water. Then, the amount of the fine bubbles 9 generated by the bubble generation apparatus 1 is, for example, feedback-controlled such that the amount of the fine bubbles 9 present becomes within a predetermined range. The predetermined range can be determined in advance, for example, by means of experiments, test operations, simulations, and the like.

The control device 7 includes, for example, a CPU (Central Processing Unit) 1001, a RAM (Random Access Memory) 1002, a ROM (Read Only Memory) 1003, an I/F (Inter Face) 1004, a bus 1005, and the like. The CPU 1001, the RAM 1002, the ROM 1003, and the I/F 1004 are connected via the bus 1005, for example. The control device 7 is implemented by a predetermined control program (for example, the production method of the present disclosure) stored in the ROM 1003 which is developed in the RAM 1002 and executed by the CPU 1001. Transmission and reception of signals and information to and from various devices in the production apparatus 100, an external network, and the like are conducted through the I/F 1004 in terms of hardware.

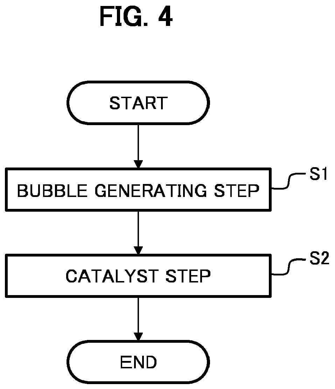

FIG. 4 is a flowchart showing the production method of the present disclosure. The production method of the present disclosure is a method for producing a target component such as, for example, ammonia from a raw material gas such as, for example, nitrogen. The production method of the present disclosure can be executed, for example, by using the production apparatus 100 shown in FIG. 1 described above. In view of this, hereinafter, FIG. 4 will be described with reference to FIG. 1 as appropriate.

The production method of the present disclosure includes a bubble generating step S1 and a catalyst step S2. Although FIG. 4 shows that the control ends after the catalyst step S2 for the convenience of explanation, normally, the generation of the fine bubbles 9 (the bubble generating step S1) and the generation reaction using the catalyst 2 (the catalyst step S2) proceed simultaneously as shown in FIG. 1.

The bubble generating step S1 is a step of generating, in the water, the fine bubbles 9 of a raw material gas which are configured to contain bubbles of at least one of MB or UFB. The generation of the fine bubbles 9 can be executed by, for example, the bubble generation apparatus 1. The catalyst step S2 is a step of promoting generation reaction from the raw material gas to a target component in the water. The catalyst step S2 can be executed by, for example, bringing the catalyst 2 and the fine bubbles 9 into contact with each other in the reaction tank 21.

According to the production apparatus 100 and the production method of the present disclosure, a sufficient amount of a raw material gas can be disposed in water. This makes it possible to efficiently execute the production of a target component. That is, as described above, MB or UFB has properties of a large gas-liquid interface and also has a high pressure inside the bubbles. For this reason, the amount of the raw material gas in water can be increased. In addition, MB or UFB has properties of remaining in water. For this reason, the frequency of direct contact between the catalyst 2 and the gas can be increased. This makes it possible to easily supply the raw material gas to the catalyst 2.

In addition, since MB or UFB has properties of not rising-up but remaining in water, a flexible apparatus configuration that does not take the rising-up of bubbles into consideration can be employed. This makes it possible to improve the flexibility of the apparatus configuration. Moreover, since MB or UFB has properties of not rising-up but remaining in water, the concentration or the number of MB or UFB can be controlled by measuring the concentration, the number, the size, and the like of these. This makes it possible to adjust MB or UFB to conditions suitable for reaction, and control MB or UFB to appropriate reaction conditions.

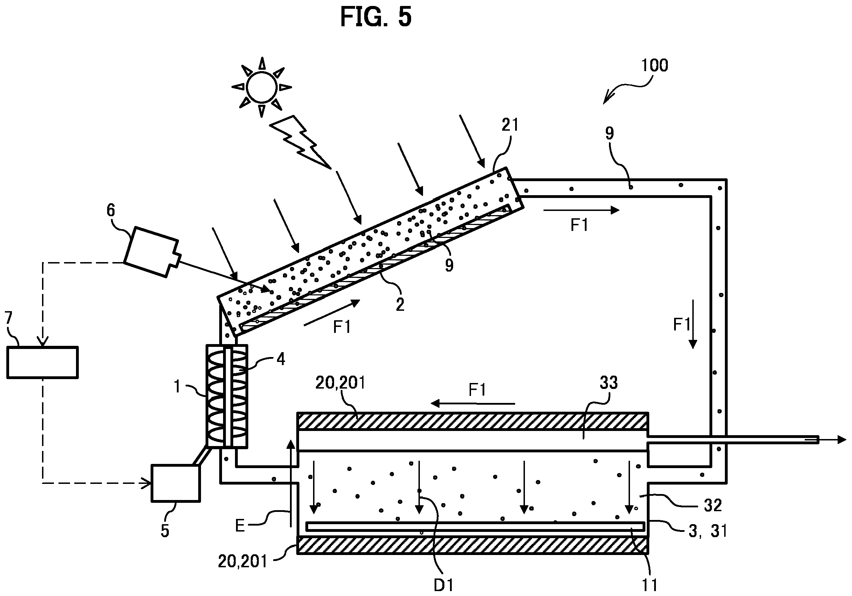

FIG. 5 is a schematic diagram showing a production apparatus 100 according to another embodiment. The production apparatus 100 shown in FIG. 5 is the same as described for the production apparatus 100 shown in the above FIG. 1 except matters described below.

In the production apparatus 100 shown in FIG. 5, a raw material gas contains carbon dioxide, and a target component is an alcohol having 1 to 3 carbon atoms (at least one of methanol, ethanol, or propanol). Carbon dioxide is a gas that has a higher solubility in water than nitrogen described above but cannot be said to be easily dissolved in water.

A separation apparatus 3 included in the production apparatus 100 includes an application apparatus 20. The application apparatus 20 applies an electric field E1 in a water phase 32 in a direction away from a gas phase 33. As described above, MB and UFB have negative charge. Hence, by applying an electric field E1 in the direction away from the gas phase 33, fine bubbles 9 can be moved in a direction of a solid arrow D1. This separates the fine bubbles 9 away from the gas phase 33, making it difficult for the fine bubbles 9 to move to the gas phase 33. Such an effect is particularly useful for a raw material gas that cannot be said to be easily dissolved in water but has a relatively high solubility such as carbon dioxide, for example.

The application apparatus 20 includes a pair of electrodes 201, 201 and a power supply apparatus (not shown), and the power supply apparatus applies voltage between the pair of electrodes 201, 201, so that the electric field E1 is generated between the pair of electrodes 201, 201. The electrodes 201, 201 are disposed in the water phase 32 and the gas phase 33, respectively. This makes it possible to generate the electric field E1 in the water phase 32. The voltage to be applied may be determined depending on the distance between the electrodes 201, 201 or the like, for example. In addition, the voltage to be applied may be controlled depending on, for example, the state of progress of the generation reaction. For example, the voltage to be applied may be set to a relatively high voltage when the generation reaction has not proceeded well, so that the amount of the fine bubbles 9 present is relatively large, and may be set to a relatively low voltage when the generation reaction has proceeded particularly well, so that the amount of the fine bubbles 9 present is relatively small.

As described above, MB or UFB does not rise up but remain in water. Hence, in the separation apparatus 3, this makes it easy to prevent mixing of the generated target component and the raw material gas. In addition, as described above, bubbles of MB or UFB are negatively charged. By electrophoresis of the raw material gas using the application apparatus 20, the direction of movement of the fine bubbles 9 can be controlled and the mixing of the raw material gas into the target component can thus be prevented. These make it possible to easily separate the generated target component and the raw material gas in the separation apparatus 3 even when both of the target component and the raw material gas are gases. In addition, since MB and UFB are negatively charged, the amount of the fine bubbles 9 to be supplied to the catalyst 2 can be controlled by the electrophoresis of the raw material gas.

In addition, in the production apparatus 100 shown in FIG. 5, the catalyst 2 has a plate shape by being fixed to a substrate, for example, and is fixed to the reaction tank 21. Hence, the generation reaction by the catalyst 2 can be stably executed.

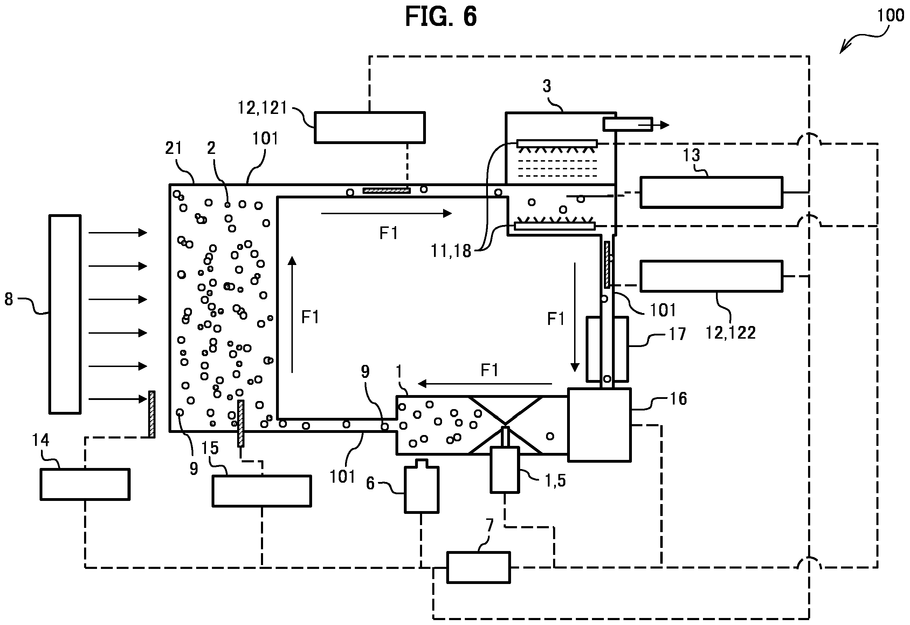

FIG. 6 is a schematic diagram showing a production apparatus 100 according to another embodiment. The efficiency of reaction of generating a target component is affected by other factors besides the amount (concentration) of a raw material gas. For example, such factors include the amount of light to be delivered to a photocatalyst (light amount), pH of water, the concentration of the target component in water, and the like. Even in the case where the amount of the raw material gas is the same, for example, if the amount of light is different, the catalytic performance by the catalyst 2 varies. Hence, the amount of the target component to be generated varies. In addition, even in the case where the amount of the raw material gas is the same, for example, if pH is different, the ease of progress of the generation reaction varies in terms of reaction equilibrium, and the amount of the target component to be generated varies. Moreover, even in the case where the amount of the raw material gas is the same, for example, if the concentration of the target component in water is different, the ease of progress of the generation reaction varies in terms of reaction equilibrium, and the amount of the target component to be generated varies. In view of this, the production apparatus 100 shown in FIG. 6 further takes into consideration factors other than the amount of the raw material gas to achieve a higher production efficiency.

The production apparatus 100 shown in FIG. 6 further includes a target component measuring device 12, a temperature measuring device 13, a light amount measuring device 14, a pH measuring device 15, a flow rate adjusting mechanism 16, a cooling apparatus 17, and a distillatory apparatus 18 in the production apparatus 100 shown in FIG. 1 described above.

The target component measuring device 12 measures the amount (for example, concentration) of the generated target component. The target component measuring device 12 includes a target component measuring device 121 which is included between the reaction tank 21 and the separation apparatus 3, and a target component measuring device 122 which is included between the separation apparatus 3 and the bubble generation apparatus 1. These make it possible to grasp the separation efficiency. The temperature measuring device 13 measures the temperature of water in the separation apparatus 3. The temperature measuring device 13 is included in the separation apparatus 3. The light amount measuring device 14 measures the amount of light to be delivered to the catalyst 2. The light amount measuring device 14 is included outside the reaction tank 21. The pH measuring device 15 measures pH of water in the reaction tank 21. The pH measuring device 15 is included in the reaction tank 21. The flow rate adjusting mechanism 16 is a mechanism (for example, a pump) that adjusts the flow rate of water circulating in the production apparatus 100. The flow rate adjusting mechanism 16 is included between the separation apparatus 3 and the bubble generation apparatus 1. The cooling apparatus 17 cools down the water temperature that has been increased by heating in the separation apparatus 3. The cooling apparatus 17 is included between the separation apparatus 3 and the bubble generation apparatus 1.

The separation apparatus 3 includes the distillatory apparatus 18 which separates the raw material gas and the target component. Including the distillatory apparatus 18, the separation apparatus 3 is capable of separating the raw material gas (for example, carbon dioxide) and the target component (an alcohol) by utilizing a difference in boiling point, and thus increasing the concentration of the alcohol. In the example shown in FIG. 6, since the distillatory apparatus 18 also serves as the heating mechanism 11, the heating mechanism 11 and the distillatory apparatus 18 are the same member.

The control device 7 controls ease of separation of the target component from in the water in the separation apparatus 3 based on a result of measurement by a sensor which measures at least one index of pH of water or the concentration of the target component in water. A sensor that measures pH of water is, for example, the pH measuring device 15. A sensor that measures the concentration of the target component in water is the target component measuring device 12. Hence, the generation reaction can be appropriately executed by controlling the ease of separation based on at least one of these measurements.

Specifically, for example, in the case where the target component is, for example, ammonia, as the amount of the target component increases, pH value of water also increases. Hence, in the case of a target component that causes pH value to increase as increasing in generation amount, when pH value has become a second pH value that is higher than a predetermined first pH value, the control device 7, for example, lowers the flow rate by the flow rate adjusting mechanism 16 from a first flow rate at the time of the first pH value to a second flow rate. This makes it possible to lower the flow rate of water flowing in the separation apparatus 3, and to thus extend the separation time in the separation apparatus 3. Hence, since the separation amount can be increased and the amount of the target component in the water can be reduced, this makes it easy for the forward reaction to proceed in consideration of chemical equilibrium.

In addition, in contrast to the case of ammonia, in the case where the target component is an acidic substance, as the generation amount increases, pH value decreases. Hence, in the case of a target component that causes pH value to decrease as increasing in generation amount, when pH value has become a second pH value that is lower than a predetermined first pH value, the control device 7, for example, lowers the flow rate by the flow rate adjusting mechanism 16 from a first flow rate at the time of the first pH value to a second flow rate. This makes it easy for the forward reaction to proceed in consideration of chemical equilibrium.

Note that in this case, a temperature control which will be described next may be conducted in place of the flow rate control by the flow rate adjusting mechanism 16 or together with the flow rate control. In addition, the first pH value, the second pH value, the first flow rate, and the second flow rate can be determined in advance, for example, by means of experiments, test operations, simulations, and the like.

In addition, as the concentration of a target component increases, it is difficult for the forward reaction to proceed in consideration of chemical equilibrium of generation reaction. In view of this, when the concentration of the target component has become a second concentration that is higher than a predetermined first concentration, the control device 7 increases the heating temperature by the heating mechanism 11 in the separation apparatus 3 from a first temperature at the time of the first concentration to a second temperature. This makes it possible to increase a separation amount in the separation apparatus 3 and to reduce the amount of the target component in the water, and thus makes it easy to for the forward reaction to proceed in consideration of chemical equilibrium.

Note that in this case, the above-described flow rate control by the flow rate adjusting mechanism 16 may be conducted in place of the temperature control or together with the temperature control. In addition, the first concentration, the second concentration, the first temperature, and the second temperature can be determined in advance, for example, by means of experiments, test operations, simulations, and the like.

Note that the amount of the raw material gas to be introduced may be increased from a first amount to a second amount in place of at least one of the flow rate control or the temperature control or together with at least one of these. This increase makes it easy for the chemical equilibrium to proceed in a rightward direction (the forward reaction). The first amount and the second amount can be determined in advance, for example, by means of experiments, test operations, simulations, and the like.

Moreover, the control device 7 controls ease of separation of the target component from in the water in the separation apparatus 3 based on the amount of light (for example, a change in light amount) delivered to the photocatalyst. The larger the light amount is, the larger the generation amount of the target component is. Hence, it is preferable to increase the separation amount of the target component as the light amount increases from the viewpoint of chemical equilibrium of generation reaction. In view of this, when the light amount has become a second light amount that is larger than a predetermined first light amount, the control device 7, for example, lowers the flow rate by the flow rate adjusting mechanism 16 from a first flow rate at the time of the first light amount to a second flow rate. This makes it possible to lower the flow rate of water flowing in the separation apparatus 3, and to thus extend the separation time in the separation apparatus 3. Hence, since the separation amount can be increased and the amount of the target component in water can be reduced, this makes it easy for the forward reaction to proceed in consideration of chemical equilibrium. The first light amount, the second light amount, the first flow rate, and the second flow rate can be determined in advance, for example, by means of experiments, test operations, simulations, and the like.

In addition, the heating mechanism 11 includes the distillatory apparatus 18. This makes it possible to separate the target component from the raw material gas by utilizing a difference in boiling point, and to thus increase the concentration of the target component.

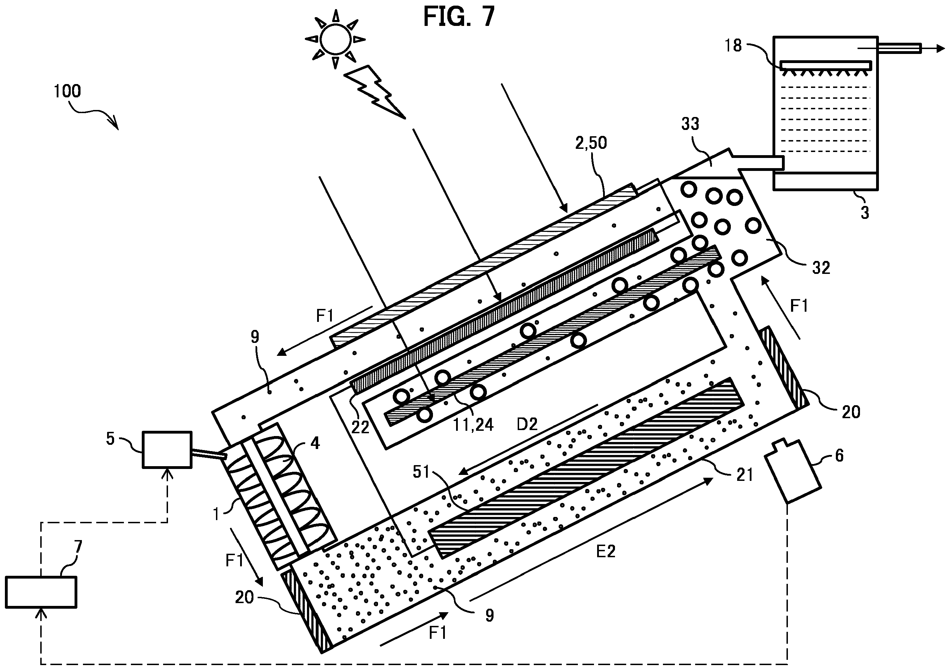

FIG. 7 is a schematic diagram showing a production apparatus 100 according to another embodiment. As described above, MB and UFB do not rise up in water but remain in water. Hence, there are no limitations for preventing transition of the fine bubbles 9 to bubbles, and a complicated apparatus configuration is possible. In view of this, in the production apparatus 100 shown in FIG. 7, excess sunlight that is not utilized in photocatalytic reaction is effectively utilized by using photoelectrodes. This makes it possible to prevent energy loss. Excess sunlight is used as a heat source of the heating mechanism 11 in the separation apparatus 3. Then, in the reaction tank 21, the fine bubbles 9 are electrophoresed by applying an electric field to control the generation reaction of the target component.

The production apparatus 100 shown in FIG. 7 includes a pair of electrodes 50, 51 and a solar cell 22 which is connected to the pair of electrodes 50, 51. The solar cell 22 is electrically connected to the electrodes 50, 51 through, for example, a conductive line such that the solar cell 22 is sandwiched by the electrodes 50, 51. One electrode 50 among the pair of electrodes 50, 51 is a photoelectrode containing, as the catalyst 2, a photocatalyst which promotes the generation reaction when irradiated with light. Hence, the electrode 50 is a photoelectrode in which oxidation reaction proceeds with light. Such a photocatalyst, for example, is a metal compound such as a metal oxide or a metal nitride but is not limited to these. The generation reaction proceeds on the surface of another electrode 51 among the pair of electrodes 50, 51. This makes it possible to particularly promote the generation reaction using the photocatalyst to proceed.

Although in the embodiments shown in FIG. 1 to FIG. 6 described above, both of the oxidation reaction and the reduction reaction proceed on the surface of a photocatalyst, in the embodiment shown in FIG. 7, the oxidation reaction and the reduction reaction are conducted at different places. Specifically, the oxidation reaction is conducted in the electrode 50. The electrode 50 is configured, for example, by disposing a photocatalyst on a surface of, for example, a transparent electrode in the form of a layer. The electrode 50 is placed outside the reaction tank 21. This allows oxygen to be generated from a water content in the air, for example. On the other hand, the reduction reaction is conducted in the electrode 51. The electrode 51 is, for example, a metal plate included inside the reaction tank 21. The reduction reaction of, for example, nitrogen in the electrode 51 generates ammonia.

In addition, the electrode 50 on the one side is configured to have light transmissivity. The solar cell 22 is disposed such that light which has passed through the electrode 50 on the one side is supplied to the solar cell 22. This allows sunlight which has not been used in the oxidation reaction in the electrode 50 to pass through the electrode 50 to reach the solar cell 22. This makes it possible to utilize sunlight without waste. Electric power generated in the solar cell 22 is used for driving the photoelectrode.

In addition, the solar cell 22 is configured to have light transmissivity. The heat generator 24, which generates heat with light, is disposed such that light which has passed through the solar cell 22 is supplied to the heat generator 24. This allows sunlight which has not been used for power generation in the solar cell 22 to pass through the solar cell 22 to reach the heat generator 24. This makes it possible to utilize sunlight without waste. The heat generator 24 is, for example, a block-colored heat generator of graphite or the like. In this way, the electrode 50, the solar cell 22, and the heat generator 24 are arranged to at least partially overlap in the light irradiation direction. This allows light to reach the electrode 50, the solar cell 22, and the heat generator 24 in this order.

The heat generator 24 functions as the heating mechanism 11. Hence, electric power used in the heating mechanism 11 can be reduced by including the heat generator 24. Moreover, the separation apparatus 3 further includes the distillatory apparatus 18. This makes it possible to separate the target component from the raw material gas by utilizing a difference in boiling point, and to thus increase the concentration of the target component. In the example shown in FIG. 7, the heating mechanism 11 and the distillatory apparatus 18 are included as separate members.

The heat generator 24, which is the heating mechanism 11, heats (preheats) water around the heat generator 24. This lowers the solubility and causes ammonia dissolved in the water to change into a bubble form and to reach the gas phase 33. At this time, a small amount of nitrogen that has been dissolved in the water also changes into a bubble form and reaches the gas phase 33. The gas phase 33 is supplied to the distillatory apparatus 18, and ammonia is separated from nitrogen in the distillatory apparatus 18. This increases the concentration of ammonia.

In the reaction tank 21, the fine bubbles 9 are caused to move in the opposite direction from the water flow by the application apparatus 20. That is, the application apparatus 20 applies an electric field E2 to an extent that can cause the fine bubbles 9 to remain in the reaction tank 21 against the water flow. This causes the fine bubbles 9 to remain in the reaction tank 21 irrespective of the water flow, and makes it possible to control the remaining time of the fine bubbles 9 in the reaction tank 21.

### Reference Sign List

1 bubble generation apparatus
10 target component
100 production apparatus
101 pipe
11 heating mechanism
12 target component measuring device
121 target component measuring device
122 target component measuring device
13 temperature measuring device
14 light amount measuring device
15 pH measuring device
16 flow rate adjusting mechanism
18 distillatory apparatus
2 catalyst
20 application apparatus
21 reaction tank
22 solar cell
24 heat generator
3 separation apparatus
31 housing
32 water phase
33 gas phase
41 refinement mechanism
42 refinement tank
5 introduction apparatus
50 electrode
51 electrode
6 grasping mechanism
7 control device
8 light source
9 fine bubble
S1 bubble generating step
S2 catalyst step

## Claims

1. A production apparatus (100) comprising:
a bubble generation apparatus (1) configured to generate, in water, fine bubbles (9) of a raw material gas which contains bubbles of at least one of micro-bubbles or ultrafine-bubbles; and
a catalyst (2) configured to promote generation reaction from the raw material gas to a target component in the water.

2. The production apparatus (100) according to claim 1,
wherein the catalyst (2) contains a photocatalyst configured to promote the generation reaction when irradiated with light.

3. The production apparatus (100) according to claim 1 or 2, further comprising:
a grasping mechanism (6) configured to grasp a state of the fine bubbles (9) in the water; and
a control device (7) configured to control the bubble generation apparatus (1) based on a result of grasping by the grasping mechanism (6).

4. The production apparatus (100) according to claim 3,
wherein the control device (7) is configured to controls the bubble generation apparatus (1) such that an amount of the fine bubbles (9) present in the water, which has been grasped by the grasping mechanism (6), is within a predetermined range.

5. The production apparatus (100) according to any of claims 1 to 4, further comprising:
a separation apparatus (3) configured to separate the target component generated in the water from the water,
wherein the separation apparatus (3) contains a water phase (32) containing the target component and a gas phase (33) which is adjacent to the water phase (32), and
wherein the separation apparatus (3) includes an application apparatus (20) configured to apply an electric field in the water phase (32) in a direction away from the gas phase (33).

6. The production apparatus (100) according to any of claims 1 to 5,
wherein the raw material gas contains at least one of nitrogen or a nitrogen oxide, and wherein the target component contains ammonia.

7. The production apparatus (100) according to any of claims 1 to 5,
wherein the raw material gas contains a carbon oxide, and
wherein the target component contains an alcohol.

8. The production apparatus (100) according to any of claims 1 to 7, further comprising:
a separation apparatus (3) configured to separate the target component generated in the water from the water, and
wherein the separation apparatus (3) includes a heating mechanism (11) configured to heat at least part of the water containing the target component.

9. The production apparatus (100) according to claim 8,
wherein the heating mechanism (11) is included in response to a value of S2/S1 of 100 or more, where S 1 represents a solubility of the raw material gas in water, and S2 represents a solubility of the target component in water, at a water temperature at a time of heating by the heating mechanism (11).

10. The production apparatus (100) according to claim 8 or 9,
wherein the separation apparatus (3) includes a distillatory apparatus (18) configured to separate the raw material gas and the target component.

11. The production apparatus (100) according to any of claims 1 to 10, further comprising:
a separation apparatus (3) configured to separate the target component generated in the water from the water; and
a control device (7) configured to control ease of separation of the target component from in the water in the separation apparatus (3) based on a result of measurement by a sensor which measures at least one index of pH of the water or a concentration of the target component in the water.

12. The production apparatus (100) according to any of claims 1 to 11,
wherein the catalyst (2) contains a photocatalyst which promotes the generation reaction when irradiated with light, and
wherein the production apparatus (100) further comprises:
a separation apparatus (3) configured to separate the target component generated in the water from the water; and
a control device (7) configured to control ease of separation of the target component from in the water in the separation apparatus (3) based on an amount of light irradiated to the photocatalyst.

13. The production apparatus (100) according to any of claims 1 to 12, further comprising:
a pair of electrodes (50, 51); and
a solar cell (22) which is connected to the pair of electrodes (50, 51),
wherein one electrode (50) of the pair of electrodes (50, 51) is a photoelectrode containing, as the catalyst (2), a photocatalyst configured to promote the generation reaction when irradiated with light, and
the generation reaction proceeds on a surface of the other electrode (51) of the pair of electrodes (50, 51).

14. The production apparatus (100) according to claim 13,
wherein the one electrode (50) has light transmissivity, and
wherein the solar cell (22) is disposed such that light which has passed through the one electrode (50) is supplied to the solar cell (22).

15. A production method comprising:
a bubble generating step (S1) of generating, in water, fine bubbles (9) of a raw material gas which contains bubbles of at least one of micro-bubbles or ultrafine-bubbles; and
a catalyst step (S2) of promoting generation reaction from the raw material gas to a target component in the water.
